# EUROPÄISCHE PATENTSCHRIFT

(11) **EP 2 794 355 B1**
(45) Veröffentlichungstag und Bekanntmachung des Hinweises auf die Patenterteilung: **19.10.2016**
(21) Anmeldenummer: 12812648.9
(22) Anmeldetag: 21.12.2012
(51) Int. Cl.: B60R 13/02

(54) **INTERIEURBAUTEIL FÜR EIN KRAFTFAHRZEUG**
INTERIOR COMPONENT FOR A VEHICLE
ÉLÉMENT INTÉRIEUR D'UN VÉHICULE AUTOMOBILE

(30) Priorität: 22.12.2011 DE 102011056933
(43) Veröffentlichungstag der Anmeldung: 29.10.2014
(73) Patentinhaber: Bayerische Motoren Werke Aktiengesellschaft, 80809 München (DE); Trützschler Nonwovens GmbH, 63329 Egelsbach (DE)
(72) Erfinder: MÜNSTERMANN, Ullrich, 63329 Egelsbach (DE); GASSLHUBER, Johann, 84172 Buch am Erlbach (DE); STRASSER, Peter, 84032 Altdorf (DE)
(74) Vertreter: Patentanwälte Bals & Vogel
(86) Internationale Anmeldenummer: PCT/EP2012/076594
(87) Internationale Veröffentlichungsnummer: WO 2013/092978

(56) Entgegenhaltungen:
- EP-A2- 0 751 249
- DE-A1- 10 057 720
- DE-A1- 10 110 396
- DE-A1-102006 001 036

## Beschreibung

Die vorliegende Erfindung betrifft ein Interieurbauteil für ein Kraftfahrzeug. Ferner betrifft die Erfindung ein Kraftfahrzeug, aufweisend wenigstens ein Interieurbauteil, sowie ein Verfahren zur Herstellung einer Deckschicht eines Interieurbauteils.

Interieurbauteile, wie beispielsweise Cockpits beziehungsweise Armaturenbretter, von Kraftfahrzeugen sind unterschiedlich ausgebildet. Derzeit werden derartige Interieurbauteile hauptsächlich aus Kunststoffspritzguss erzeugt. Die Oberflächen, die dem Innenraum der Kraftfahrzeuge zugewandt sind, werden bei Kraftfahrzeugen der unteren Klassen oft spritzblank belassen oder allenfalls lackiert. In den höherwertigen Klassen von Kraftfahrzeugen werden die Oberflächen in der Regel stärker aufgewertet. Derartige Interieurbauteile werden mit Folien, insbesondere Kompakt- oder Schaumfolien, überzogen oder Träger und Folie werden gemeinsam hinterschäumt. In dem Luxussegment von Kraftfahrzeugen bestehen die Oberflächen der Interieurbauteile häufig aus Nähkleidern aus Kunstleder oder Echtleder. Bis auf Echtleder sind die meisten gängigen Oberflächenmaterialien hauptsächlich aus petrochemischen Produkten, wie Polyurethan, thermoplastischen Elastomeren und Polyolefinen oder Polyvinylchlorid ausgebildet.

Insbesondere bei den unterklassigen Kraftfahrzeugen sind die Interieurbauteile eher hart und ohne zusätzliches Dekor ausgebildet. Interieurbauteile und Oberflächen von Interieurbauteilen, die vollständig oder hauptsächlich aus petrochemischen Produkten bestehen, werden aufgrund des steigenden Umweltbewusstseins der Kunden von diesen häufig kritisch gesehen. Interieurbauteile, die mit Nähkleidern aus Kunststoff oder Echtleder versehen sind, sind zwar relativ hochwertig, aber teuer und im Bezug auf Oberflächen schwer.

Aus der gattungsgemäßen DE 100 57 720 A1 ist ein mehrschichtiges Flächenmaterial, welches aus verfilzungsfähigen Fasern enthaltenen Faserbahnen und aufkaschierten Papier-, Papp- oder anderen Materialbahnen aus verfilzungsfähigen Fasern als Deckschicht besteht. Die Faserbahnen können sowohl aus Natur-, Chemie- als auch Industriefasern oder deren Gemischen bestehen. So können als Naturfasern Fasern aus Baumwolle, Flachs, Hanf, Jute, Sisal, Kokos, Tierwolle, Tierhaare eingesetzt werden. Des Weiteren ist aus der DE 100 57 720 A1 bekannt, dass die eingesetzten Faserbahnen durch ein Wasserstrahlverfahren verfestigt sind.

Aus der DE 10 2006 001 036 A1 sind Faserformteile mit teppichartiger Textiloberfläche bekannt. Ferner ist aus der DE 10 2006 001 036 A1 bekannt, dass zum Verfestigen von Textilfasern zu einer teppichartigen Faserschicht und zum Verbinden mit einer ersten verpressten Faserschicht eine Fluidstrahlvernadelung, insbesondere eine Druckgas-, Druckflüssigkeitsstrahl und/oder Dampfstrahlvernadelung eingesetzt werden kann.

Die EP 0 751 249 A2 offenbart ein Verfahren und eine Vorrichtung zur Verfestigung eines Faservlieses. Insbesondere ist dort bekannt. dass Fasern in einem kontinuierlichen Behandlungsverfahren mittels einer Wasservernadelung mit einem Wasserdruck von mindestens 100, vorzugsweise 180 bar mit einem Trägervlies verbunden und dabei gleichzeilig verfestigt werden können.

Es ist Aufgabe der vorliegenden Erfindung, die voranstehend beschriebenen Nachteile bei Interieurbauteilen, insbesondere bei Cockpits, von Kraftfahrzeugen zumindest teilweise zu beheben. Insbesondere ist es Aufgabe der vorliegenden Erfindung, Oberflächen für Interieurbauteile für ein Kraftfahrzeug bereitzustellen, die kostengünstig herstellbar sind, die leicht ausgebildet sind und die eine hohe Kundenakzeptanz aufweisen.

Voranstehende Aufgabe wird gelöst durch ein Interieurbauteil für ein Kraftfahrzeug mit den Merkmalen des Anspruchs 1, durch ein Kraftfahrzeug mit den Merkmalen des Anspruchs 12 sowie durch ein Verfahren mit den Merkmalen des Anspruchs 13. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Interieurbauteil beschrieben sind, selbstverständlich auch im Zusammenhang mit dem erfindungsgemäßen Kraftfahrzeug sowie dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Interieurbauteil für ein Kraftfahrzeug gelöst, bei dem das Interieurbauteil eine Deckschicht aus fluidstrahlverfestigtem Naturfaservliesmaterial oder eine Deckschicht aus einem fluidstrahlverfestigtem Gemisch aus unterschiedlichen Naturfaservliesmaterialien aufweist. Im Lichte der Erfindung stellen Naturfaservliesmaterialien Vliesstoffe dar. Ein Vliesstoff ist dadurch charakterisiert, dass dieser ein aus Fasern gefertigtes Flächengebilde ist. Das heißt, Vliesstoffe sind aus Faser hergestellt. Die Fasern der Naturfaservliesmaterialen beziehungsweise der Vliesstoffe können unterschiedlich lang sein. Beispielsweise können die Fasern sehr kurz sein, aber auch beinahe endlose Filamente aufweisen. Ein derartig ausgebildetes Interieurbauteil für ein Kraftfahrzeug, insbesondere ein Cockpitbauteil, wie beispielsweise ein Armaturenbrett, kann kostengünstig hergestellt werden, da Naturfaservliesmaterial als nachwachsender Rohstoff leicht und kostengünstig bezogen werden kann. Ferner sind Interieurbauteile die eine Deckschicht aus Naturfaservliesmaterial oder einem Gemisch aus Naturfaservliesmaterialien aufweisen, aufgrund des geringen Gewichtes des Naturfaservliesmaterials leicht ausgebildet, wodurch im Vergleich zu Interieurbauteilen aus Kunststoff oder Leder eine deutliche Gewichtseinsparung möglich ist. Ein weiterer entscheidender Vorteil ist die hohe Kundenakzeptanz von Naturfaservliesmaterialien. Da es sich bei den Naturfaservliesmaterialien um nachwachsende, biologische Rohstoffe handelt, weisen diese erwartungsgemäß eine hohe Akzeptanz bei Kraftfahrzeugkunden auf. Insbesondere sind Interieurbauteile, die eine Deckschicht aus Naturfaservliesmaterial oder aus einem Gemisch aus verschiedenen Naturfaservliesmaterialien aufweisen, einfach und kostengünstig entsorgbar, im Vergleich zu Interieurbauteilen mit einer Deckschicht aus petrochemischen Produkten.

Gemäß der Erfindung kann das Interieurbauteil vollständig aus der Deckschicht ausgebildet sein. In diesem Fall weist die Deckschicht eine bestimmte Stärke, insbesondere eine Stärke von 0,07 bis 3 cm oder mehr auf, um dadurch eine gewisse Stabilität zu erhalten.

Kern der Erfindung ist, dass die Deckschicht des Interieurbauteils aus einem fluidstrahlverfestigtem Naturfaservliesmaterial oder aus einem fluidstrahlverfestigtem Gemisch aus unterschiedlichen Naturfaservliesmaterialien ausgebildet ist. Im so genannten Nonwovensbereich ist es seit längerem bekannt Vliesmaterialien durch eine Fluidstrahlverfestigung zu bearbeiten, insbesondere zu verfestigen. Fluidstrahlverfestigung bedeutet im Sinne der Erfindung, dass die Naturfaservliesmaterialien durch eine Dampfstrahlverfestigung oder durch eine Flüssigkeitsstrahlverfestigung bearbeitet sind. Das Konstruktionsprinzip der Fluidstrahlverfestigung besteht darin, dass bestimmte Pumpen Fluiddrücke von bis zu 400 bar erzeugen. Das komprimierte Fluid wird gleichmäßig in so genannten Düsenbalken über die erforderliche Arbeitsbreite verteilt und durch die mit Öffnungen von weniger als 0,15 mm versehenen Düsenstreifen geleitet, wodurch ein Fluidvorhang entsteht. Die Fluidstrahlen, das heißt die Dampf- oder Flüssigkeitsstrahlen, treffen mit einer Geschwindigkeit von bis zu 350 m/s auf das unverfestigte Naturfaservliesmaterial. Das Fluid wird durch das Naturfaservliesmaterial gesaugt und anschließend in einem individuell angelegten Filtrationsprozess recycelt.

Je nach der Stärke des Drucks mit dem das Fluid auf das Naturfaservliesmaterial trifft, können unterschiedlich stark verfestigte Interieurbauteile erzeugt werden. Je höher der Druck ist, umso verfestigter ist die Deckschicht des Interieurbauteils. Das heißt, durch eine Einstellung des Drucks, mit dem das Fluid durch die Düsen auf das Naturfaservliesmaterial trifft, kann die Elastizität der erzeugten Deckschicht beeinflusst werden. Interieurbauteile, die aus einem fluidstrahlverfestigten Naturfaservliesmaterial, das mit einem Druck zwischen 20 und 100 bar verfestigt wurde, erzeugt worden sind, weisen eine höhere Elastizität auf, als fluidstrahlverfestigte Naturfaservliesmaterialien, die mit Drücken von über 100 bar verfestigt worden sind. Besonders bevorzugt weist ein erfindungsgemäßes Interieurbauteil eine Deckschicht auf, die mit einem Druck von weniger als 40 bar, insbesondere mit einem Druck von 20 bis 40 bar, fluidstrahlverfestigt ist.

Besonders bevorzugt ist ein Interieurbauteil für ein Kraftfahrzeug, bei dem die Deckschicht ein wasserstrahlverfestigtes Naturfaservliesmaterial oder ein wasserstrahlverfestigtes Gemisch aus unterschiedlichen Naturfaservliesmaterialien aufweist. Derart ausgebildete Interieurbauteile können aufgrund der Verwendung von Wasser besonders einfach und kostengünstig hergestellt werden.

Je dicker die Deckschicht und damit das Interieurbauteil sind, umso formstabiler ist dieses. Gemäß einer besonders bevorzugten Weiterentwicklung der Erfindung kann bei einem Interieurbauteil vorgesehen sein, dass das Naturfaservliesmaterial der Deckschicht des Interieurbauteils Baumwolle, Flachs, Jute, Hanf, Kenaf, Sisal, Abaca, Kokosnuss und/oder Viskose aufweist. Derartige Naturfasern sind einfach und kostengünstig herstellbar. Insbesondere handelt es sich bei den Naturfasern häufig um Abfallprodukte. So können beispielsweise Baumwollfasern zum Einsatz kommen die als Abfallprodukte bei der Baumwollverwendung anfallen. Die aus Naturfaservliesmaterialien beziehungsweise aus einem Gemisch aus Naturfaservliesmaterialien ausgebildeten Deckschichten der Interieurbauteile weisen vorteilhafterweise ein Flächengewicht von 100 bis 1000 g/m², insbesondere ein Flächengewicht von 100 bis 350 g/m², auf. Beispielsweise kann die Deckschicht des Interieurbauteils rein aus Baumwolle, rein aus Flachs, rein aus Hanf oder rein aus Viskose ausgebildet sein. Selbstverständlich sind auch Deckschichten aus anderen Naturfaservliesmaterialien denkbar. Ferner kann die Deckschicht eines Interieurbauteils aus zwei oder mehr verschiedenen Naturfasermaterialien ausgebildet sein. Der Vorteil von einem Gemisch aus unterschiedlichen Naturfaservliesmaterialien besteht darin, dass naturgemäße Einschränkungen der Qualitätsparameter einiger Naturfaservliesmaterialien unter Zusatz anderer Naturfaservliesmaterialien ausgeglichen werden können. Ein bewehrtes Gemisch von unterschiedlichen Naturfaservliesmaterialien basiert auf Flachs und Sisal, wobei der Flachs die feinere Komponente darstellt und der Sisal eine gewisse Steifigkeit in das Vliesmaterial einbringt.

Des Weiteren kann vorteilhafterweise bei einem Interieurbauteil vorgesehen sein, dass die Deckschicht einen geringen Anteil an Chemiefasern, insbesondere Viskosefasern, aufweist. Das bedeutet, dass die Deckschicht zum einem großen Anteil, beispielsweise zu 70-90%, aus Naturfaservliesmaterial(ein) und zu einem untergeordneten Anteil, beispielsweise zu 10-30%, aus Chemiefasern, wie Fasern aus natürlichen Polymeren oder aus synthetischen Polymeren, aufweisen kann. Das heißt, die Chemiefasern können Fasern aus natürlichen Polymeren oder Fasern aus synthetischen Polymeren sein. Selbstverständlich können bei der Deckschicht auch Mischungen aus Fasern aus natürlichen Polymeren und Fasern aus synthetischen Polymeren eingesetzt werden.

Gemäß einer besonders bevorzugten Weiterentwicklung der Erfindung kann bei einem Interieurbauteil vorgesehen sein, dass die Deckschicht auf einer Trägerschicht des Interieurbauteils angeordnet ist. Ein derartig ausgebildetes Interieurbauteil für ein Kraftfahrzeug weist die erforderliche Steifigkeit aufgrund der Verwendung einer Trägerschicht sowie eine gewünschte Oberflächenweichheit (Haptik) aufgrund der Verwendung der Deckschicht aus Naturfaservliesmaterialien auf. Dabei ist die Trägerschicht des Interieurbauteils vorteilhafterweise formstabil ausgebildet, so dass die aus Naturfaservliesmaterial(en) bestehende Deckschicht elastisch ausgebildet sein kann.

Die Trägerschicht eines zuvor beschriebenen Interieurbauteils kann aus verschiedenartigen Materialien ausgebildet sein. Beispielsweise ist denkbar, dass die Trägerschicht aus einem Leichtmetall, wie beispielsweise Aluminium, ausgebildet ist. Besonders bevorzugt ist die Trägerschicht eines Interieurbauteils als Kunststoffteil, insbesondere als Kunststoffspritzgussteil, und/oder als Naturfaserpressstoff ausgebildet. Derartig ausgebildete Trägerschichten sind kostengünstig und einfach herstellbar und bilden eine formstabile Grundlage für die Aufnahme einer aus Naturfaservliesmaterial ausgebildeten Deckschicht. So ist es beispielsweise denkbar, dass die Trägerschicht sowohl Anteile aus Kunststoff, als auch Anteile aus Naturfasern aufweist. Dies gewährleistet einerseits, dass eine gewisse Stabilität der Trägerschicht vorhanden ist, andererseits, dass die Trägerschicht relativ leicht ausgebildet ist. Durch die Verwendung von Naturfaserpressstoff in der Trägerschicht ist ferner eine hohe Kundenakzeptanz gegeben. Ebenso ist durch die Verwendung von hauptsächlich Naturfaservliesmaterial bei einem derartigen Interieurbauteil eine einfache, umweltschonende und kostengünstige Entsorgung gewährleistet.

Ein weiteres bevorzugtes erfindungsgemäßes Interieurbauteil zeichnet sich dadurch aus, dass zwischen der Trägerschicht und der Deckschicht eine Haptikschicht, insbesondere aus Polyurethan oder thermoplastischem Elastomer, angeordnet ist. Der Einsatz einer derartigen Haptikschicht zwischen der Trägerschicht und der Deckschicht gewährleistet eine gute und dauerhafte Elastizität des Interieurbauteils. Durch die Verwendung einer derartigen zusätzlichen Haptikschicht bei einem Interieurbauteil kann ein so genannter Softtouch unter der Deckschicht beziehungsweise eine Erhöhung des Softtouches der Deckschicht erzeugt werden. Die Haptikschicht ist im Vergleich zur Trägerschicht elastisch und bewirkt eine bestimmte, angenehm empfundene Haptik des Interieurbauteils. Die Haptikschicht kann beispielsweise auf der Trägerschicht aufgeklebt oder in anderer Weise mit dieser verbunden sein. Ebenso kann die Deckschicht auf der Haptikschicht aufgeklebt oder in anderer Weise mit dieser verbunden sein. Besonders bevorzugt ist die Haptikschicht aus Polyurethan, insbesondere aus Polyurethanschaum, ausgebildet. Eine derartige Haptikschicht zeichnet sich durch hohe Flexibilität sowie gute wärme- und schalldämmende Eigenschaften aus und kann direkt zwischen Träger und Haptikschicht kleberlos geschäumt werden. Ebenso sind Haptikschichten in Form von Abstandsgewirken vorzugsweise aus Polyester einsetzbar. Beispielsweise kann die Haptikschicht auch aus thermoplastischem Elastomer, beispielsweise TPO-Schaum, ausgebildet sein. TPO sind thermoplastische Olefin-Elastomere, die einen bestimmten Elastomeranteil aufweisen zur Erhöhung der Weichheit der Haptikschicht. Auch Wattierungen oder Vliese sind als Haptikschicht einsetzbar. Derartige Haptikschichten sind insbesondere frei von Weichmachern und zeichnen sich insbesondere durch ein geringes Gewicht aus.

Die Deckschicht des Interieurbauteils ist im eingebauten Zustand des Interieurbauteils dem Kraftfahrzeuginneren zugewandt. Es kann von Vorteil sein, wenn die Deckschicht zumindest an der im eingebauten Zustand des Interieurbauteils dem Innenraum des Kraftfahrzeuges zugewandten Seite eine glatte Oberfläche aufweist. Ferner ist ein Interieurbauteil bevorzugt, bei dem die Deckschicht zumindest an der im eingebauten Zustand des Interieurbauteils dem Innenraum des Kraftfahrzeuges zugewandten Seite strukturiert ausgebildet ist. Hierdurch weist die Deckschicht des Interieurbauteils eine hohe Oberflächengüte sowie ein gutes Erscheinungsbild auf.

Ein weiterer Vorteil ist es, wenn bei einem Interieurbauteil die Deckschicht wenigstens teilweise perforiert und/oder geprägt ausgebildet ist. Hierdurch sind die Deckschicht und damit das Interieurbauteil einerseits besonders leicht andererseits funktionabel ausgebildet. Durch die Fluidstrahlverfestigung des Naturfaservliesmaterials ist sowohl eine perforierte, als auch eine geprägte Ausbildung der Deckschicht erzeugbar. Beispielsweise kann die Deckschicht in regelmäßigen Abständen Löcher aufweisen. Durch spezielle Werkzeuge können bei der Herstellung der Deckschicht Verformungen in der Oberfläche der Deckschicht erzeugt werden, so dass diese perforiert und/oder geprägt ausgebildet ist. Die Prägung der Deckschicht kann beispielsweise durch Kalander erfolgen. Hier können insbesondere Präge- oder Gaufrierkalander zum Einsatz kommen.

Ein erfindungsgemäßes Interieurbauteil zeichnet sich weiter dadurch aus, dass die Deckschicht durch Tränkung in einer Flüssigkeit schmutz- und feuchtigkeitsabweisend, kratzbeständig, klimabeständig und/oder strahlenbeständig ausgebildet ist. Insbesondere vorteilhaft ist ein Interieurbauteil, bei dem die Deckschicht durch Tränkung mittels einer bestimmten Flüssigkeit UV-strahlungsbeständig ist. Ein derart ausgebildetes Interieurbauteil gewährleistet, dass weder Schmutz noch Feuchtigkeit in die Deckschicht des Interieurbauteils eindringen können. Ferner ist ein derartiges Interieurbauteil aufgrund der Kratzbeständigkeit sowie der Klimabeständigkeit, insbesondere der Strahlenbeständigkeit, langlebig ausgebildet.

Insbesondere ist bei dem Interieurbauteil vorgesehen, dass zumindest an der im eingebauten Zustand des Interieurbauteils dem Innenraum des Kraftfahrzeuges zugewandten Seite eine dünne Schutzschicht auf der Deckschicht angeordnet ist. Die dünne Schutzschicht gewährleistet, dass die Deckschicht des Interieurbauteils gegenüber äußeren Einflüssen besonders geschützt ist. Die Schutzschicht ist transparent ausgebildet. Durch eine dünne und transparente Ausbildung der Schutzschicht ist gewährleistet, dass die aus Naturfaservliesmaterial oder aus einem Gemisch aus unterschiedlichen Naturfaservliesmaterialien ausgebildete Deckschicht dem Nutzer eines Kraftfahrzeuges sichtbar bleibt. Hierdurch ist insbesondere die hohe Kundenakzeptanz gewährleistet. Die dünne Schutzschicht kann beispielsweise als dünne Folie an der Deckschicht angeordnet oder als Lackschicht auf der Deckschicht aufgebracht sein oder zum Beispiel durch Übergießen der Deckschicht mit Polyurethan in einem formgebenden Werkzeug ausgebildet sein. Ferner ist die Schutzschicht schmutz- und feuchtigkeitsabweisend, kratzbeständig, klimabeständig und/oder strahlenbeständig ausgebildet. Ein derartig ausgebildetes Interieurbauteil für ein Kraftfahrzeug ist leicht, hoch belastbar und über die Lebenszeit des Kraftfahrzeuges beständig. Dadurch, dass zumindest die Deckschicht aus Naturfaservliesmaterial ausgebildet ist, ist ein derartiges Interieurbauteil leichter, umweltschonender und kostengünstiger zu entsorgen, als bekannte Interieurbauteile, die hauptsächlich aus petrochemischen Produkten ausgebildet sind.

Als Interieurbauteile kommen verschiedene Bauteile im Kraftfahrzeuginneren in Betracht. Besonders bevorzugt ist das Interieurbauteil ein Cockpitbauteil des Kraftfahrzeuges, insbesondere das Armaturenbrett eines Kraftfahrzeuges.

Gemäß einem zweiten Aspekt der Erfindung wird die Aufgabe durch ein Kraftfahrzeug, aufweisend wenigstens ein Interieurbauteil, gelöst, wobei das Interieurbauteil gemäß dem ersten Aspekt der Erfindung ausgebildet ist. Sämtliche Vorteile, die zu einem Interieurbauteil gemäß dem ersten Aspekt der Erfindung beschrieben worden sind, ergeben sich somit selbstverständlich auch für ein erfindungsgemäßes Kraftfahrzeug. Kraftfahrzeuge sind insbesondere Personenkraftfahrzeuge oder Lastkraftfahrzeuge. Es ist aber auch denkbar, dass das Kraftfahrzeug ein Boot beziehungsweise ein Schiff sowie ein Flugzeug ist.

Gemäß einem dritten Aspekt der Erfindung wird die Aufgabe durch ein Verfahren gemäß Anspruch 13 gelöst.

Je nach der Stärke des Drucks mit dem das Fluid auf das Naturfaservliesmaterial trifft, können unterschiedlich stark verfestigte Interieurbauteile erzeugt werden. Je höher der Druck ist, umso verfestigter ist die Deckschicht des Interieurbauteils. Das heißt, durch eine Einstellung des Drucks, mit dem das Fluid durch die Düsen auf das Naturfaservliesmaterial trifft, kann die Elastizität der erzeugten Deckschicht beeinflusst werden. Interieurbauteile, die aus einem fluidstrahlverfestigten Naturfaservliesmaterial, das mit einem Druck zwischen 20 und 100 bar verfestigt wurde, erzeugt worden sind, weisen eine höhere Elastizität auf, als fluidstrahlverfestigte Naturfaservliesmaterialien, die mit Drücken von über 100 bar verfestigt worden sind.

Bevorzugt kann bei einem Verfahren vorgesehen sein, dass das Flächengewicht des Naturfaservliesmaterials oder des Gemisches aus unterschiedlichen Naturfaservliesmaterialien 100 bis 1000 g/m² beträgt.

Des Weiteren ist bei dem Verfahren vorgesehen, dass auf die Oberfläche der Deckschicht eine Schutzschicht aufgebracht wird. Die Schutzschicht ist transparent ausgebildet. Die Schutzschicht kann durch Anordnen einer dünnen Folie, durch Aufbringen einer Lackschicht oder durch Übergießen der Deckschicht mit Polyurethan in einem formgebenden Werkzeug aufgebracht werden. Ebenso ist die Schutzschicht schmutz- und feuchtigkeitsabweisend, kratzbeständig, klimabeständig und/oder strahlenbeständig ausgebildet.

Ferner kann bei einem Verfahren vorgesehen sein, dass die Fluidstrahlen mit einer Geschwindigkeit von bis zu 350 m/s auf das unverfestigte Naturfaservliesmaterial oder das unverfestigte Gemisch aus unterschiedlichen Naturfaservliesmaterialien aufgebracht werden. Das Fluid wird durch das Naturfaservliesmaterial gesaugt und anschließend in einem individuell angelegten Filtrationsprozess recycelt.

Des Weiteren kann bei einem Verfahren vorgesehen sein, dass die Verfestigung des Naturfaservliesmaterials oder des Gemisches aus unterschiedlichen Naturfaservliesmaterialien durch Dampfstrahlen oder Flüssigkeitsstrahlen durchgeführt wird.

Bevorzugt kann bei einem Verfahren vorgesehen sein, dass die Deckschicht auf einer Trägerschicht des Interieurbauteils angeordnet wird.

Auch kann zwischen der Trägerschicht und der Deckschicht eine Haptikschicht, insbesondere aus Polyurethan oder thermoplastischem Elastomer, angeordnet werden. Durch die Verwendung einer derartigen zusätzlichen Haptikschicht bei einem Interieurbauteil kann ein so genannter Softtouch unter der Deckschicht beziehungsweise eine Erhöhung des Softtouches der Deckschicht erzeugt werden. Die Haptikschicht kann beispielsweise auf der Trägerschicht aufgeklebt oder in anderer Weise mit dieser verbunden werden. Ebenso kann die Deckschicht auf der Haptikschicht aufgeklebt oder in anderer Weise mit dieser verbunden werden. Besonders bevorzugt kann die Haptikschicht aus Polyurethan, insbesondere aus Polyurethanschaum, ausgebildet werden. Eine derartige Haptikschicht zeichnet sich durch hohe Flexibilität sowie gute wärme- und schalldämmende Eigenschaften aus und kann direkt zwischen Träger und Haptikschicht kleberlos geschäumt werden.

Insbesondere kann durch ein zuvor beschriebenes Verfahren ein Interieurbauteil für ein Kraftfahrzeug gemäß dem ersten Aspekt der Erfindung hergestellt werden.

Ein erfindungsgemäßes Interieurbauteil und seine Weiterbildungen sowie deren Vorteile werden nachfolgend anhand von Zeichnungen näher erläutert. Es zeigen jeweils schematisch:
- Figur 1: einen Ausschnitt durch ein Interieurbauteil, welches nach dem erfindungsgemäßen Konstruktionsprinzip ausgebildet ist,
- Figur 2: einen Ausschnitt durch ein anderes Interieurbauteil, aufweisend eine Deckschicht, welches nach dem erfindungsgemäßen Konstruktionsprinzip ausgebildet ist,
- Figur 3: einen Ausschnitt durch ein weiteres Interieurbauteil, aufweisend eine Deckschicht sowie eine Schutzschicht, welches gemäß dem erfindungsgemäßen Konstruktionsprinzip ausgebildet ist,
- Figur 4: einen Ausschnitt durch ein weiteres Interieurbauteil, aufweisend eine Haptikschicht, eine Deckschicht sowie eine Schutzschicht, welches nach dem erfindungsgemäßen Konstruktionsprinzip ausgebildet ist, und
- Figur 5: einen Ausschnitt durch ein weiteres Interieurbauteil, aufweisend eine Haptikschicht und eine Deckschicht.

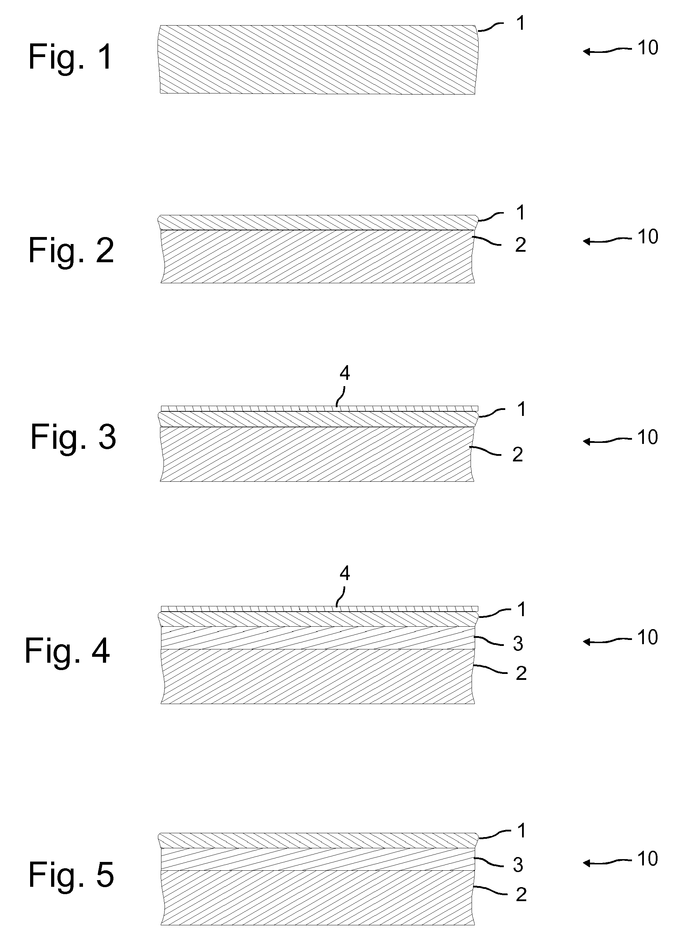

Elemente mit gleicher Funktion und Wirkungsweise sind in den Fig. 1 bis 5 jeweils mit denselben Bezugszeichen versehen.

In Fig. 1 ist schematisch ein Abschnitt eines Interieurbauteils 10 für ein Kraftfahrzeug dargestellt, welches nach dem erfindungsgemäßen Konstruktionsprinzip ausgebildet ist. Das Interieurbauteil 10 weist eine Deckschicht 1 aus einem fluidstrahlverfestigtem, insbesondere wasserstrahlverfestigtem, Naturfaservliesmaterial auf. In diesem Ausführungsbeispiel des Interieurbauteils 10 bildet die Deckschicht 1 vollständig das Interieurbauteil 10. Im Vergleich zu den in den Fig. 2 bis 4 dargestellten Interieurbauteilen 10 ist bei dem Interieurbauteil 10 gemäß Fig. 1 die Deckschicht 1 deutlich dicker ausgebildet. Hierdurch erhält das Interieurbauteil 10 eine Formstabilität, wodurch es in einem Kraftfahrzeug einsetzbar ist. Ein derartig ausgebildetes Interieurbauteil 10 ist einfach und kostengünstig herstellbar. Dies ist insbesondere durch die Verwendung von Naturfaservliesmaterial gegeben. Als Fasermaterial können insbesondere auch Abfallprodukte verwendet werden. Als Naturfaservliesmaterial kann Baumwolle, Flachs, Jute, Hanf, Kenaf, Kokos, Abaca, Sisal und/oder Viskose verwendet werden. Dadurch, dass die Deckschicht 1 fluidstrahlverfestigtes Naturfaservliesmaterial aufweist, sind eine Elastizität und eine angenehme Haptik des Interieurbauteils 10 gegeben.

In Fig. 2 ist schematisch ein Ausschnitt eines weiteren Interieurbauteils 10 für ein Kraftfahrzeug dargestellt. Das Interieurbauteil 10 zeichnet sich dadurch aus, dass dieses eine Deckschicht 1 sowie eine Trägerschicht 2 aufweist. Dabei ist die Deckschicht 1 an der Trägerschicht 2 befestigt, insbesondere verklebt. Die Trägerschicht 2, die insbesondere als Kunststoffteil und/oder Naturfaserpressstoff ausgebildet ist, gewährleistet eine hohe Stabilität des Interieurbauteils, währenddessen die Deckschicht 1 für eine gute Elastizität und damit für eine angenehme Haptik des Interieurbauteils 10 dient. Im Vergleich zu dem Interieurbauteil 10 gemäß Fig. 1 kann die Deckschicht 1 bei dem Interieurbauteil 10 gemäß Fig. 2 deutlich dünner ausgebildet sein, da diese nicht für eine ausreichende Stabilität des Interieurbauteils 10 dienen muss.

Fig. 3 zeigt schematisch einen Ausschnitt eines anderen Interieurbauteils 10, welches nach dem erfindungsgemäßen Konstruktionsprinzip ausgebildet ist. Bei diesem Interieurbauteil 10 ist zusätzlich auf der der Trägerschicht 2 abgewandten Seite der Deckschicht 1 eine Schutzschicht 4 angeordnet. Diese Schutzschicht 4 dient zum nochmals verbesserten Schutz des Interieurbauteils 10, insbesondere zum verbesserten Schutz der Deckschicht 1 des Interieurbauteils 10. Insbesondere ist die Schutzschicht 4 schmutz- und feuchtigkeitsabweisend ausgebildet. Hierdurch ist gewährleistet, dass weder Schmutz, noch Flüssigkeit in das Interieurbauteil 10 eindringen können. Ferner zeichnet sich eine derartige Schutzschicht 4 dadurch aus, dass sie kratzbeständig, klimabeständig und/oder strahlenbeständig ausgebildet ist. Hierdurch ist eine lange Lebensdauer des Interieurbauteils 10, insbesondere eine Lebensdauer des Interieurbauteils 10 über die Lebensdauer eines Kraftfahrzeuges, gewährleistet. Die Schutzschicht 4 kann als Folie, beispielsweise als Polyurethanfolie, ausgebildet sein. Alternativ dazu kann die Schutzschicht 4 auflackiert oder gegossen sein. Insbesondere ist die Schutzschicht 4 dünn und transparent ausgebildet, so dass die unter der Schutzschicht 4 angeordnete Deckschicht 1 durch einen Nutzer eines Kraftfahrzeuges sichtbar bleibt. Durch die Verwendung und die Sichtbarkeit der aus Naturfaservliesmaterial ausgebildeten Deckschicht 1 ist eine hohe Kundenakzeptanz gewährleistet, da Naturfaservliesmaterialien nachwachsbare, ökologische Rohstoffe sind.

In der Fig. 4 ist schematisch ein Ausschnitt eines weiteren Interieurbauteils 10 für ein Kraftfahrzeug dargestellt. Dieses Interieurbauteil 10 zeichnet sich dadurch aus, dass im Vergleich zu dem Interieurbauteil gemäß Fig. 3 zusätzlich zwischen der Deckschicht 1 und der Trägerschicht 2 eine Haptikschicht 3 angeordnet ist. Diese Haptikschicht 3 dient zur Erhöhung des Softtouch-Gefühls des Interieurbauteils 10. Insbesondere dient die Haptikschicht 3 für eine hohe Elastizität der Oberfläche des Interieurbauteils 10. Bei einer Berührung des Interieurbauteils 10 empfindet ein Fahrzeuginsasse eine angenehme weiche Haptik des Interieurbauteils 10. Dies ist insbesondere durch die Verwendung der zusätzlichen Haptikschicht 3 gegeben. Die Haptikschicht 3 ist vorteilhafterweise aus Polyurethan, insbesondere aus einem Polyurethanschaum, oder aus einem thermoplastischen Elastomer, beispielsweise einem TPO-Schaum oder einem Abstandsgewirke ausgebildet.

Fig. 5 zeigt einen Ausschnitt durch ein weiteres Interieurbauteil 10, aufweisend eine Haptikschicht 3 und eine Deckschicht 1. Bei diesen Interieurbauteil 10 ist keine Schutzschicht 4, wie die Interieurbauteile 10 gemäß den Fig. 3 und 4 auf. Damit die Deckschicht 1 schmutz- und feuchtigkeitsabweisend, kratzbeständig, klimabeständig und/oder strahlenbeständig ausgebildet ist, kann diese vorteilhafterweise in einer speziellen Flüssigkeit getränkt worden sein.

Allen Interieurbauteilen 10 gemäß den Fig. 1 bis 5 ist gemeinsam, dass diese durch die Verwendung von fluidstrahlverfestigtem Naturfaservliesmaterial beziehungsweise durch die Verwendung von einem Gemisch aus fluidstrahlverfestigten Naturfaservliesmaterialien einfach und kostengünstig herstellbar sind, diese leicht ausgebildet sind und sich durch eine hohe Kundenakzeptanz auszeichnen. Je nach dem mit welchem Druck die Naturfaservliesmaterialien fluidstrahlverfestigt sind, kann eine unterschiedlich hohe Weichheit der Deckschicht 1 gewährleistet werden. Eine Erhöhung der Weichheit des Interieurbauteils 10 ist durch die zusätzliche Verwendung der Haptikschicht 3, gemäß den Fig. 4 und 5, gegeben. Durch den hohen Anteil an Naturfaservliesmaterial können derartige Interieurbauteile 10 einfach, kostengünstig und umweltschonend entsorgt und sogar recycelt werden.

Die voranstehenden Ausführungsformen der Interieurbauteile 10 beschreiben die vorliegende Erfindung nur im Rahmen von Beispielen. Selbstverständlich können einzelne Merkmale der beschriebenen Interieurbauteile, sofern technisch sinnvoll, frei miteinander kombiniert werden, ohne den Rahmen der vorliegenden Erfindung zu verlassen.

### Bezugszeichenliste

- 1: Deckschicht
- 2: Trägerschicht
- 3: Haptikschicht
- 4: Schutzschicht

- 10: Interieurbauteil für ein Kraftfahrzeug

## Patentansprüche

1. Interieurbauteil (10) für ein Kraftfahrzeug, wobei das Interieurbauteil (10) eine Deckschicht (1) aus fluidstrahlverfestigtem Naturfaservliesmaterial oder eine Deckschicht (1) aus einem fluidstrahlverfestigtem Gemisch aus unterschiedlichen Naturfaservliesmaterialien aufweist, dass zumindest an der im eingebauten Zustand des Interieurbauteils (10) dem Innenraum des Kraftfahrzeugs zugewandten Seite eine dünne Schutzschicht (4) auf der Deckschicht (1) angeordnet ist, **dadurch gekennzeichnet, dass** die Schutzschicht (4) transparent ausgebildet ist, dass die Schutzschicht (4) schmutz- und feuchtigkeitsabweisend, kratzbeständig, klimabeständig und/oder strahlenbeständig ausgebildet ist und dass die Deckschicht (1) wenigstens teilweise perforiert und/oder geprägt ausgebildet ist..

2. Interieurbauteil (10) nach Anspruch 1, **dadurch gekennzeichnet, dass** die Schutzschicht (4) eine dünne Folie ist.

3. Interieurbauteil (10) nach wenigstens einem der vorangegangenen Ansprüche, **dadurch gekennzeichnet, dass** die Schutzschicht (4) als Lackschicht auf der Deckschicht (1) aufgebracht ist.

4. Interieurbauteil (10) nach wenigstens einem der vorangegangenen Ansprüche, **dadurch gekennzeichnet, dass** die Schutzschicht (4) aus Polyurethan ausgebildet ist.

5. Interieurbauteil (10) nach wenigstens einem der vorangegangenen Ansprüche, **dadurch gekennzeichnet, dass** die Deckschicht (1) ein wasserstrahlverfestigtes Naturfaservliesmaterial oder ein wasserstrahlverfestigtes Gemisch aus unterschiedlichen Naturfaservliesmaterialien aufweist, wobei das Naturfaservliesmaterial der Deckschicht (1) Baumwolle, Flachs, Jute, Hanf, Kenaf, Sisal, Abaca, Kokosnuss und/oder Viskose aufweist..

6. Interieurbauteil (10) nach wenigstens einem der vorangegangenen Ansprüche, **dadurch gekennzeichnet, dass** die Deckschicht (1) auf einer Trägerschicht (2) des Interieurbauteils (10) angeordnet ist.

7. Interieurbauteil (10) nach Anspruch 6, **dadurch gekennzeichnet, dass** die Trägerschicht (2) als Kunststoffteil, insbesondere Kunststoffspritzgussteil, und/oder als Naturfaserpressstoff ausgebildet ist.

8. Interieurbauteil (10) nach Anspruch 6 oder 7, **dadurch gekennzeichnet, dass** zwischen der Trägerschicht (2) und der Deckschicht (1) eine Haptikschicht (3), insbesondere aus Polyurethan oder thermoplastischem Elastomer, angeordnet ist.

9. Interieurbauteil (10) nach wenigstens einem der vorangegangenen Ansprüche, **dadurch gekennzeichnet, dass** die Deckschicht (1) zumindest an der im eingebauten Zustand des Interieurbauteils (10) dem Innenraum des Kraftfahrzeugs zugewandten Seite eine glatte Oberfläche aufweist und/oder dass die Deckschicht (1) zumindest an der im eingebauten Zustand des Interieurbauteils (10) dem Innenraum des Kraftfahrzeugs zugewandten Seite strukturiert ausgebildet ist.

10. Interieurbauteil (10) nach wenigstens einem der vorangegangenen Ansprüche, **dadurch gekennzeichnet, dass** die Deckschicht (1) durch Tränkung in einer Flüssigkeit schmutz- und feuchtigkeitsabweisend, kratzbeständig, klimabeständig und/oder strahlenbeständig ausgebildet ist.

11. Interieurbauteil (10) nach wenigstens einem der vorangegangenen Ansprüche, **dadurch gekennzeichnet, dass** das Interieurbauteil (10) ein Cockpitbauteil des Kraftfahrzeuges, insbesondere das Armaturenbrett, ist.

12. Kraftfahrzeug, aufweisend wenigstens ein Interieurbauteil, **dadurch gekennzeichnet, dass** das Interieurbauteil (10) nach wenigstens einem der vorangegangenen Ansprüche ausgebildet ist.

13. Verfahren zur Herstellung einer Deckschicht (1) eines Interieurbauteils (10) für ein Kraftfahrzeug, wobei das Verfahren durch folgende Verfahrensschritte **gekennzeichnet ist:**
a) **Durch** eine Fluidstrahlverfestigung mit einem Druck von über 100bar wird ein Naturfaservliesmaterial, das ein Flächengewicht von 100 bis 1000 g/m² aufweist, oder ein Gemisch aus unterschiedlichen Naturfaservliesmaterialien, das ein Flächengewicht von 100 bis 1000 g/m² aufweist, verfestigt und
b) in einem Kalander wird anschließend eine Prägung zumindest eines Teils der Oberfläche des verfestigten Naturfaservliesmaterials oder des verfestigten Gemisches aus unterschiedlichen Naturfaservliesmaterialien erzeugt, und dass auf die Oberfläche der Deckschicht (1) eine transparente, schmutz- und feuchtigkeitsabweisende, kratzbeständige, klimabeständige und/oder strahlenbeständige Schutzschicht (4) aufgebracht wird,
wobei die Deckschicht (1) wenigstens teilweise perforiert und/oder geprägt ausgebildet ist

14. Verfahren nach Anspruch 13, **dadurch gekennzeichnet, dass** das Flächengewicht des Naturfaservliesmaterials oder des Gemisches aus unterschiedlichen Naturfaservliesmaterialien 100 bis 350 g/m² beträgt.

15. Verfahren nach einem der vorangegangenen Ansprüche 13 oder 14, **dadurch gekennzeichnet, dass** die Fluidstrahlen mit einer Geschwindigkeit von bis zu 350 m/s auf das unverfestigte Naturfaservliesmaterial oder das unverfestigte Gemisch aus unterschiedlichen Naturfaservliesmaterialien aufgebracht werden.

16. Verfahren nach einem der vorangegangenen Ansprüche 13 bis 15, **dadurch gekennzeichnet, dass** Schutzschicht (4) durch Anordnen einer dünnen Folie, durch Aufbringen einer Lackschicht oder durch Übergießen der Deckschicht (1) mit Polyurethan in einem formgebenden Werkzeug

17. Verfahren nach einem der vorangegangenen Ansprüche 13 bis 16, **dadurch gekennzeichnet, dass** die Verfestigung des Naturfaservliesmaterials oder des Gemisches aus unterschiedlichen Naturfaservliesmaterialien durch Dampfstrahlen oder Flüssigkeitsstrahlen durchgeführt wird.

18. Verfahren nach einem der vorangegangenen Ansprüche 13 bis 17, **dadurch gekennzeichnet, dass** die Deckschicht (1) auf einer Trägerschicht (2) des Interieurbauteils (10) angeordnet wird.

## Claims

1. An interior component (10) for a motor vehicle, wherein the interior component (10) comprises a covering layer (1) of fluid jet-compacted natural non-woven fibre material or a covering layer (1) of a fluid jet compacted mixture of different natural non-woven fibre materials, that at least on the side facing the interior of the motor vehicle in the installed state of the interior component (10)a thin protective layer (4) is arranged on the covering layer (1), **characterized in that** the protective layer (4) design is transparent, **in that** the protective layer (4) design is dirt and moisture-repellent, scratch-proof, climate-resistant and/or radiation resistant and **in that** the covering layer (1) is at least partly perforated and/or embossed in design.

2. The interior component (10) according to claim 1, **characterized in that** the protective layer (4) is a thin film.

3. The interior component (10) according to at least one of the preceding claims, **characterized in that** the protective layer (4) is applied to the covering layer (1) as a paint layer.

4. The interior component (10) according to at least one of the preceding claims, **characterized in that** the protective layer (4) is formed of polyurethane.

5. The interior component (10) according to at least one of the preceding claims, **characterized in that** the covering layer (1) comprises a water jet-compacted natural non-woven fibre material or a water jet compacted mixture of different natural non-woven fibre materials, wherein the natural non-woven fibre material of the covering layer (1) comprises cotton, flax, jute, hemp, kenaf, sisal, abaca, coconut and/or viscose.

6. The interior component (10) according to at least one of the preceding claims, **characterized in that** the covering layer (1) is arranged on a substrate layer (2) of the interior component (10).

7. The interior component (10) according to claim 6, **characterized in that** the substrate layer (2) design is as plastic part, in particular plastic injection moulded part and/or as natural fibre pressed material.

8. The interior component (10) according to claims 6 or 7, **characterized in that** between the substrate layer (2) and the covering layer (1) a haptic layer (3), in particular from polyurethane or thermoplastic elastomer, is arranged.

9. The interior component (10) according to at least one of the preceding claims, **characterized in that** the covering layer (1), at least on the side facing the interior of the motor vehicle in the installed state of the interior component (10) has a smooth surface and/or **in that** the covering layer (1) is designed structured at least on the side facing the interior of the motor vehicle in the installed state of the interior component (10).

10. The interior component (10) according to at least one of the preceding claims, **characterized in that** the covering layer (1) by way of impregnation in a liquid design is dirt and moisture repellent, scratch-proof, climate-resistant and/or radiation resistant.

11. The interior component (10) according to at least one of the preceding claims, **characterized in that** the interior component (10) is a cockpit component of the motor vehicle, in particular the instrument panel.

12. A motor vehicle, comprising at least one interior component, **characterized in that** the interior component (10) design is according to at least one of the preceding claims.

13. A method for producing a covering layer (1) of an interior component (10) for a motor vehicle, wherein the method is **characterized by** the following method steps:
a) by way of a fluid jet compaction with a pressure of over 100 bar a natural non-woven fibre material, having a weight per unit area of 100 to 1,000 g/m², or a mixture of different natural non-woven fibre materials, having a weight per unit area of 100 to 1,000 g/m², is compacted and
b) in a calender, embossing of at least one part of the surface of the compacted natural non-woven fibre material or of the compacted mixture of different natural non-woven fibre materials is subsequently created, and in that on the surface of the covering layer (1) a transparent, dirt and moisture-repellent, scratch-proof, climate-resistant and/or radiation resistant protect layer (4) is applied,
wherein the covering layer (1) is designed at least partly perforated and/or embossed.

14. The method according to claim 13, **characterized in that** the area weight of the natural non-woven fibre material or of the mixture of different natural non-woven fibre materials is 100 to 350 g/m².

15. The method according to any one of the preceding claims 13 or 14, **characterized in that** the fluid jets are applied with a velocity of up to 350 m/s onto the uncompacted natural non-woven fibre material or the uncompacted mixture of different natural non-woven fibre materials.

16. The method according to any one of the preceding claims 13 to 15, **characterized in that** protective layer (4) is applied by arranging a thin film, by applying a paint layer or by pouring polyurethane over the covering layer (1) in a moulding tool.

17. The method according to any one of the preceding claims 13 to 16, **characterized in that** the compaction of the natural non-woven fibre material or of the mixture of different natural non-woven fibre materials is carried out by way of steam jets or liquid jets.

18. The method according to any one of the preceding claims 13 to 17, **characterized in that** the covering layer (1) is arranged on a substrate layer (2) of the interior component (10).

## Revendications

1. Elément intérieur (10) pour un véhicule automobile, dans lequel l'élément intérieur (10) présente une couche de recouvrement (1) en un matériau non tissé en fibres naturelles consolidé par jets de fluide ou une couche de recouvrement (1) en un mélange consolidé par jets de fluide de différents matériaux non tissés en fibres naturelles, une mince couche de protection (4) étant disposée sur la couche de recouvrement (1) au moins sur le côté tourné vers l'espace intérieur du véhicule automobile à l'état monté de l'élément intérieur (10), **caractérisé en ce que** la couche de protection (4) est réalisée de manière transparente, **en ce que** la couche de protection (4) est réalisée de manière à repousser la saleté et l'humidité, à résister aux rayures, à résister au climat et/ou à résister aux rayonnements et **en ce que** la couche de recouvrement (1) est réalisée de manière au moins partiellement perforée et/ou estampée.

2. Elément intérieur (10) selon la revendication 1, **caractérisé en ce que** la couche de protection (4) est une feuille mince.

3. Elément intérieur (10) selon l'une au moins des revendications précédentes, **caractérisé en ce que** la couche de protection (4) est appliquée en tant que couche de vernis sur la couche de recouvrement (1).

4. Elément intérieur (10) selon l'une au moins des revendications précédentes, **caractérisé en ce que** la couche de protection (4) est réalisée en polyuréthane.

5. Elément intérieur (10) selon l'une au moins des revendications précédentes, **caractérisé en ce que** la couche de recouvrement (1) présente un matériau non tissé en fibres naturelles consolidé par jets de fluide ou un mélange consolidé par jets de fluide de différents matériaux non tissés en fibres naturelles, dans lequel le matériau non tissé en fibres naturelles de la couche de recouvrement (1) présente du coton, du lin, du jute, du chanvre, du kenaf, du sisal, de l'abaca, de la noix de coco et/ou du viscose.

6. Elément intérieur (10) selon l'une au moins des revendications précédentes, **caractérisé en ce que** la couche de recouvrement (1) est disposée sur une couche de support (2) de l'élément intérieur (10).

7. Elément intérieur (10) selon la revendication 6, **caractérisé en ce que** la couche de support (2) est réalisée en tant qu'élément en plastique, en particulier en tant qu'élément de moulage par injection en plastique et/ou en tant que matière comprimée de fibres naturelles.

8. Elément intérieur (10) selon la revendication 6 ou 7, **caractérisé en ce qu'**une couche haptique (3), en particulier en polyuréthane ou un élastomère thermoplastique, est disposée entre la couche de support (2) et la couche de recouvrement (1).

9. Elément intérieur (10) selon l'une au moins des revendications précédentes, **caractérisé en ce que** la couche de recouvrement (1) présente une surface lisse au moins sur le côté tourné vers l'espace intérieur du véhicule à l'état de montage de l'élément intérieur (10) et/ou **en ce que** la couche de recouvrement (1) est réalisée de manière structurée au moins sur le côté tourné vers l'espace intérieur du véhicule à l'état de montage de l'élément intérieur (10).

10. Elément intérieur (10) selon l'une au moins des revendications précédentes, **caractérisé en ce que** la couche de recouvrement (1) est réalisée de manière à repousser la saleté et l'humidité, à résister aux rayures, à résister au climat et/ou à résister aux rayonnements en étant imbibée par un liquide.

11. Elément intérieur (10) selon l'une au moins des revendications précédentes, **caractérisé en ce que** l'élément intérieur (10) est un élément d'habitacle du véhicule automobile, en particulier le tableau de bord.

12. Véhicule automobile présentant au moins un élément intérieur, **caractérisé en ce que** l'élément intérieur (10) est réalisé selon l'une au moins des revendications précédentes.

13. Procédé pour la fabrication d'une couche de recouvrement (1) d'un élément intérieur (10) pour un véhicule automobile, dans lequel le procédé est **caractérisé par** les étapes suivantes du procédé :
a) grâce à une consolidation par jets de fluide avec une pression de plus de 100 bars, on consolide un matériau non tissé en fibres naturelles présentant un poids surfacique de 100 à 1000 g/m² ou un mélange de différents matériaux non tissés en fibres naturelles présentant un poids surfacique de 100 à 1000 g/m², et
b) dans une calandre, un estampage étant ensuite généré pour au moins une partie de la surface du matériau non tissé en fibres naturelles consolidé ou du mélange consolidé de différents matériaux non tissés en fibres naturelles, et sur la surface de la couche de recouvrement (1), une couche de protection (4) transparente, repoussant la saleté et l'humidité, résistant aux rayures, résistant au climat et/ou résistant aux rayonnements étant appliquée,
dans lequel la couche de recouvrement (1) est réalisée au moins partiellement de manière perforée et/ou estampée.

14. Procédé selon la revendication 13, **caractérisé en ce que** le poids surfacique du matériau non tissé en fibres naturelles ou du mélange de différents matériaux non tissés en fibres naturelles est de 100 à 350 g_{/}m².

15. Procédé selon l'une des revendications 13 ou 14 précédentes, **caractérisé en ce que** les jets de fluide sont appliqués avec une vitesse de près de 350 m/s sur le matériau non tissé en fibres naturelles non consolidé ou le mélange non consolidé de différents matériaux non tissés en fibres naturelles.

16. Procédé selon l'une des revendications 13 à 15 précédentes, **caractérisé en ce que** la couche de protection (4) est appliqué par mise en place d'une feuille mince, par application d'une couche de vernis, ou en versant du polyuréthane sur la couche de recouvrement (1) dans un outil de formage.

17. Procédé selon l'une des revendications 13 à 16 précédentes, **caractérisé en ce que** la consolidation du matériau non tissé en fibres naturelles ou du mélange de différents matériaux non tissés en fibres naturelles est réalisée par jets de vapeur ou jets de liquide.

18. Procédé selon l'une des revendications 13 à 17 précédentes, **caractérisé en ce que** la couche de recouvrement (1) est disposée sur une couche de support (2) de l'élément intérieur (10).
